# EUROPÄISCHE PATENTANMELDUNG

(11) **EP 2 072 851 A2**
(43) Veröffentlichungstag der Anmeldung: **24.06.2009**
(21) Anmeldenummer: 08171453.7
(22) Anmeldetag: 12.12.2008
(51) Int. Cl.: F16F 1/42, F16F 1/373

(54) **Elastischer Formkörper für die Schwingungs- und Körperschallisolation von z.B. Maschinen oder Bauten**

(30) Priorität: 21.12.2007 DE 102007062859
(71) Anmelder: ESZ Wilfried Becker GmbH, 41564 Kaarst-Büttgen (DE)
(72) Erfinder: Becker, Ralf, 41352 Korschenbroich (DE)
(74) Vertreter: Christophersen, Ulrich Rudolf

(57) **Zusammenfassung**

Vorgeschlagen wird ein elastischer Formkörper für die Schwingungs- und Körperschallisolation von z.B. Maschinen oder Bauten, bestehend aus einer ersten Deckschicht (1), einer hierzu parallelen zweiten Deckschicht (2) sowie einer Vielzahl von biegsamen Stegen (11, 12, 13, 14). Die Stege sind zu den Deckschichten (1, 2) einstückig und erstrecken sich entlang eines gekrümmten Weges zwischen den Deckschichten. An eine erste Krümmung (11.1, 12.1, 13.1, 14.1) mit erstem Krümmungssinn schließt sich zumindest eine weitere Krümmung (11.2; 12.2; 13.2; 14.2) mit entgegensetztem Krümmungssinn an.

Um auch im Hauptbelastungszustand eine gute Scherstabilität zu erzielen, d.h. eine gute Festigkeit gegenüber parallel zu den Deckschichten (1, 2) wirkenden Belastungen, ist der elastische Körper so gestaltet, dass sich zwei benachbarte Stege (11 und 12; 13 und 14) bei Annäherung der Deckschichten (1, 2) örtlich berühren. Vorzugsweise befinden sich die Orte (P1, P2) der Berührung an den Krümmungen der beiden Stege.

## Beschreibung

Die Erfindung betrifft einen elastischen Formkörper für die Schwingungs- und Körperschallisolation von z.B. Maschinen oder Bauten, bestehend aus einer ersten Deckschicht, einer hierzu parallelen zweiten Deckschicht sowie einer Vielzahl von biegsamen Stegen, welche zu den Deckschichten einstückig sind und sich zwischen diesen entlang eines gekrümmten Weges erstrecken, wobei sich an eine erste Krümmung mit erstem Krümmungssinn zumindest eine weitere Krümmung mit entgegensetztem Krümmungssinn anschließt.

Elastische Formkörper für die Schwingungs- und Körperschallisolation sowie zur Entkoppelung von Masse-Feder-Systemen für Maschinen, Gebäude, deren Teile, Brücken, Schienenfahrzeuge und andere Bauten sind z.B. aus der DE 20 2004 020 145 U1 oder der JP 06-026543 A bekannt. Sie zeichnen sich dadurch aus, dass sie in Hauptbelastungsrichtung in der ersten Hälfte der Verformung einen degressiven Verlauf zeigen, durch den die sich unter zunehmender Belastung einstellenden Eigenfrequenzen überproportional kleiner werden. Die Federkonstante nimmt im degressiven Bereich über der Belastung ab, was darauf zurückzuführen ist, dass sich die gekrümmten Stege unter steigender Belastung mit einem verhältnismäßig großen Biegeverformungsanteil verformen, der für die Degression der Federkennlinie verantwortlich ist. Die Quersteifigkeit dieser elastischen Formkörper, d.h. die Festigkeit gegenüber in Richtung der Deckschichten wirkenden Belastungen, ist verhältnismäßig gering.

Aus der EP 0 302 139 A1 bekannt ist ein ebenfalls aus zwei Deckschichten sowie dazwischen verlaufenden Stegen zusammengesetzter, so genannter Knickfederkörper. Die darin verwendeten Stege weisen etwa in der Mitte ihrer Länge eine verringerte Wanddicke auf, wodurch definierte Knickstellen entstehen, an denen sich die Stege nach Art eines Gelenks falten können. Bei Belastung des elastischen Formkörpers kommt es nach Überschreiten einer konstruktiv durch die Steggeometrie und die Materialkenndaten vorgegebenen kritischen Auflast unter Zusammenbruch der der Auflast entgegenwirkenden elastischen Rückstellkraft zu einem Einknicken des Körpers. Eine derartige Verformungscharakteristik, welche in ähnlicher Weise auch ein in der DE 299 15 220 U1 beschriebener elastischer Formkörper aufweist, ist in vielen Fällen unerwünscht. Zudem sind auch diese elastischen Formkörper unbefriedigend hinsichtlich ihrer Festigkeit gegenüber parallel zu den Deckschichten wirkenden Belastungen.

Hingegen sind aus der US 4,942,703 Formkörper für die Schwingungsdämpfung von Gebäuden bekannt, die zwar eine ausgeprägte Querfestigkeit gegenüber in Richtung der Deckschichten wirkenden Belastungen zeigen, die jedoch auch in Richtung quer zu den Deckschichten ein stark progressives Federverhalten zeigen, welches für viele Anwendungen vor allem bei der Körperschalldämpfung von Maschinen und Anlagen, etwa im Rahmen von Maschinenfundamenten, nicht geeignet ist.

Der Erfindung liegt die **Aufgabe** zugrunde, einen elastischen Formkörper für die Schwingungs- und Körperschalldämpfung von Maschinen und Bauten zu schaffen, der auch im Hauptbelastungszustand eine gute Scherstabilität, d.h. Festigkeit gegenüber parallel zu den Deckschichten wirkenden Belastungen, aufweist.

Zur **Lösung** dieser Aufgabe wird in Weiterbildung des elastischen Formkörpers mit den eingangs angegebenen Merkmalen vorgeschlagen, dass sich zwei benachbarte Stege bei Annäherung der Deckschichten örtlich berühren.

Da sich im Hauptbelastungszustand des erfindungsgemäßen elastischen Formkörpers, d.h. bei Annäherung der den Körper nach oben und unten abschließenden Deckschichten, benachbarte Stege örtlich berühren und damit gegeneinander abstützen, kommt es zu einer erhöhten Festigkeit des elastischen Formkörpers gegenüber solchen Belastungen, die parallel zu den Deckschichten wirken. Die Gefahr eines unerwünschten Versetzens, d.h. Scherens, der beiden Deckschichten relativ zueinander ist daher nicht nur bei unbelastetem Formkörper gering, sondern auch im Hauptbelastungszustand, d.h. unter Auflast.

Vorteilhafte Ausgestaltungen eines derart gestalteten elastischen Formkörpers sind in den Unteransprüchen angegeben.

So ist es von Vorteil, wenn sich die Orte der Berührung an den Krümmungen der beiden Stege befinden. Vorzugsweise befindet sich der Ort der Berührung an dem einen der benachbarten Stege an dessen erster Krümmung und an dem anderen der benachbarten Stege an dessen weiterer Krümmung.

Mit einer weiteren Ausgestaltung wird vorgeschlagen, dass bei den beiden benachbarten Stegen die Aufeinanderfolge der Krümmungssinne gleich, jedoch die Größe und/oder der Radius der Krümmungsbögen jeweils unterschiedlich ist. Dies ermöglicht bei entsprechend hoher Auflast, d.h. im Hauptbelastungszustand, ein günstiges gegenseitiges Anliegen und damit gegeneinander Abstützen der benachbarten Stege.

Eine weitere Ausgestaltung ist gekennzeichnet durch eine erste Gruppe von Stegen und eine zweite Gruppe von Stegen, wobei die Aufeinanderfolge der Krümmungssinne der Krümmungen in der ersten und der zweiten Gruppe entgegengesetzt ist und wobei auf mindestens zwei Stege der ersten Gruppe mindestens zwei Stege der zweiten Gruppe folgen. Diese Bauweise führt zu einer teilweisen oder vollständigen Kompensation der prinzipbedingt mit der Verformung der Stege einhergehenden Asymmetrie, und zu einem nochmals erhöhten Widerstand gegen seitliche Versatzkräfte.

In Bezug auf die Ausführungsform mit Stegen in zwei unterschiedlichen Gruppen wird ferner vorgeschlagen, dass benachbarte Stege unterschiedlicher Gruppen so weit zueinander beabstandet sind, dass es auch bei hoher Auflast zu keiner Berührung der Stege kommt. Das gegenseitige seitliche Abstützen, sobald die Auflast groß genug ist, erfolgt daher nur zwischen benachbarten Stegen ein- und derselben Gruppe. Hingegen befindet sich zwischen Stegen unterschiedlicher Gruppen stets ein solcher Freiraum, dass ein gegenseitiger Kontakt und damit eine Beeinflussung des lokalen Verformungsverhaltens vermieden wird.

Mit dem erfindungsgemäßen Formkörper lässt sich das Verhältnis der Steifigkeit in Hauptbelastungsrichtung und in Querrichtung in einem weiten Rahmen gestalten, was für Masse-Feder-Systeme wichtig ist. Des Weiteren lässt sich die erzielbare Dämmwirkung auch bei in Richtung der Deckschichten wirkenden Belastungen, z.B. bei Kräften infolge von Kurvenfahrten auf Schienenfahrwegen, günstig anpassen. Demgegenüber ist bei den bekannten Formkörpern das Verhältnis von Steifigkeit in Hauptbelastungsrichtung zur Quersteifigkeit bei geforderter Hauptbelastungsfähigkeit nicht so flexibel gestaltet, da eine bestimmte Bauhöhe des elastischen Formkörpers eine davon abhängige Quersteifigkeit zur Folge hat.

Der erfindungsgemäße elastische Formkörper nimmt Unebenheiten des Untergrundes beim Belegen mit Beton und Schüttgütern, z.B. Schotter bei einem Schienenfahrweg, ohne Beeinträchtigung der Eigenfrequenz des Systems auf, da der Formkörper Unebenheiten, selbst spitze Eindrücke von Schotter und ähnlichem Schüttgut, ohne nennenswerte Verformung der Federwände aufnehmen kann.

Die Erfindung wird nachfolgend anhand von Ausführungsbeispielen näher erläutert. Auf der Zeichnung zeigen:
- Figur 1: in perspektivischer Darstellung eine erste Ausführungsform eines erfindungsgemäßen Formköpers in unbelastetem Zustand;
- Figur 2: eine Ansicht des Formkörpers nach Figur 1 unter Belastung in Hauptbelastungsrichtung;
- Figur 3: eine Ansicht des Formkörpers nach Figur 1 in der höchsten Belastungsstufe;
- Figur 4: eine zweite Ausführungsform eines erfindungsgemäßen elastischen Formkörpers und
- Figur 5: der Formkörper nach Figur 4 unter Belastung.

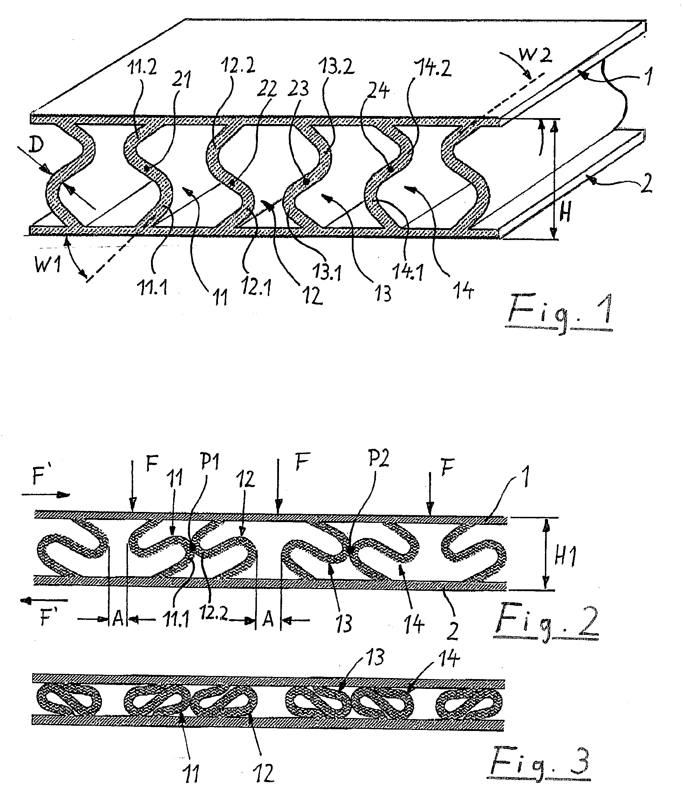

In Figur 1 ist eine erste Ausführungsform eines sich federelastisch verhaltenden Formkörpers darstellt. Dieser besteht aus einer oberen Deckschicht 1, einer im Abstand und parallel zu der oberen Deckschicht 1 angeordneten unteren Deckschicht 2 sowie einer Vielzahl von federnden Stegen. Die Stege setzen sich jeweils aus gekrümmten Abschnitten zusammen und sind einstückig sowohl mit der oberen Deckschicht 1 als auch der unteren Deckschicht 2 verbunden. Der so gestaltete Formkörper kann z.B. durch Extrusion eines Elastomers hergestellt werden, d.h. sowohl die Deckschichten 1, 2 wie auch die einzelnen verbindenden Stege werden gleichzeitig in einem Arbeitsgang extrudiert. Er ist aufgrund seiner Dimensionierung und Dämpfungscharakteristik für den Einsatz an industriellen Maschinen und Anlagen, etwa in deren Fundamenten, sowie in Bauten geeignet.

Die federnden Stege sind hinsichtlich ihres Krümmungsverlaufs nicht einheitlich gestaltet, sondern es existieren insgesamt vier unterschiedliche Stegformen, die sich wiederum in zwei Gruppen unterteilen lassen. Die Stege 11 und 12 bilden hierbei die erste Gruppe, und die Stege 13 und 14 die zweite Gruppe. Die Stege 11, 12 der ersten Gruppe zeichnen sich dadurch aus, dass sie entlang ihres Verlaufs von der unteren Deckschicht 2 zur oberen Deckschicht 1 zunächst eine Linkskrümmung 11.1 bzw. 12.1, und dann eine Rechtskrümmung 11.2 bzw. 12.2 aufweisen. Hingegen weisen die Stege 13, 14 der anderen Gruppe, ebenfalls bei Betrachtung ihres Verlaufs von der unteren Deckschicht 2 zur oberen Deckschicht 1, zunächst eine Rechtskrümmung 13.1 bzw. 14.1, und dann eine Linkskrümmung 13.2 bzw. 14.2 auf.

Der Steg 11 weist zwischen seiner Linkskrümmung 11.1 und seiner darauf folgenden Rechtskrümmung 11.2 den Wendepunkt 21 auf. Analog weisen auch die Stege 12, 13, 14 entsprechende Wendepunkte 22, 23, 24 auf, die jeweils den Übergang der ersten Krümmung mit erstem Krümmungssinn in die weitere Krümmung mit entgegengesetztem Krümmungssinn bezeichnen.

Über die gesamte Länge der gekrümmten Stege 11, 12, 13, 14 ist deren Wanddicke D im Wesentlichen konstant, weshalb die Stege insgesamt eine Querschnittsform ähnlich einem S bzw. einem spiegelbildlichen S aufweisen. In den Bereichen, in denen die Stege 11, 12, 13, 14 auf das Material der Deckschichten 1, 2 stoßen, beträgt der Winkel der Stegenden zu den Deckschichten W1 bzw. W2. Vorzugsweise ist der Winkel W1 gleich dem Winkel W2 und beträgt 30 bis 60°, vorzugsweise 43°.

In funktionaler Hinsicht bilden die unmittelbar benachbarten Stege 11, 12 der ersten Gruppe ein zusammenwirkendes Stegpaar und ebenso die beiden Stege 13, 14 der zweiten Gruppe ein zusammenwirkendes Stegpaar. Zwar weisen die Stege 11, 12 dieselbe Abfolge von zunächst Linkskrümmung und dann Rechtskrümmung auf, jedoch sind die Größe und/oder der Radius der Krümmungsbögen jeweils unterschiedlich. Der Krümmungsbogen bzw. Radius der Krümmung 11.1 ist größer, als jener der Krümmung 12.1. Umgekehrt ist der Krümmungsbogen bzw. Radius der Krümmung 12.2 größer, als jener der Krümmung 11.2. Dieser Unterschied führt zugleich dazu, dass der Wendepunkt 21 der Krümmungen des ersten Steges 11 etwas näher zu der Deckschicht 1, hingegen der Wendepunkt 22 der Krümmungen des zweiten Steges 12 etwas näher zu der Deckschicht 2 liegt.

Diese Unterschiede der beiden Stege 11, 12 der ersten Gruppe gelten analog für die beiden Stege 13, 14 der zweiten Gruppe. Auch bei den Stegen 13, 14 ist zwar die Aufeinanderfolge der Krümmungssinne gleich, jedoch die Größe der Krümmungsbögen bzw. Krümmungsradien unterschiedlich, wodurch der Wendepunkt 23 etwas näher zu der Deckschicht 2, hingegen der Wendepunkt 24 etwas näher zu der Deckschicht 1 liegt.

In Figur 2 ist anhand des Hauptbelastungszustandes durch die auf die Deckschichten wirkende Kraft F dargestellt, wie sich der elastische Formkörper nach Figur 1 unter Last verformt. Infolge der bereits geschilderten, aufeinander abgestimmten Geometrien der Stegpaare 11, 12 und 13, 14 kommt es, sobald der ursprüngliche Abstand H der Deckschichten sich auf eine Höhe H1 reduziert hat, orthogonal zur Verformungsrichtung zu einem Kontakt zwischen den sich biegenden Stegen der Stegpaare. Der sich hierbei ergebende Berührungsort P1 der beiden Stege 11, 12, sowie der entsprechende Berührungsort P2 der beiden Stege 13, 14 befinden sich auf der Hälfte der Höhe H1 des Formkörpers. Die orthogonal zur Verformungsrichtung erfolgende Berührung an dem Ort P1 findet zwischen der unteren Krümmung 11.1 des Steges 11 und der oberen Krümmung 12.2 des anderen Steges 12 statt. Analog erfolgt die Berührung am Ort P2 zwischen der oberen Krümmung 13.2 des Steges 13 und der unteren Krümmung 14.1 des anderen Steges 14.

Durch den nur bereichsweisen Kontakt zwischen den benachbarten Stegen 11 und 12 bzw. 13 und 14 kommt es zu einer gegenseitigen Abstützung und insgesamt zu einer Verbesserung der Scherstabilität des elastischen Formkörpers, d.h. seiner Festigkeit gegenüber in Richtung der Deckschichten 1, 2 wirkenden Belastungen F'.

Bei nochmals höherer Hauptbelastung kommt es zu der in Figur 3 dargestellten Verformung. Hierbei krümmen sich die Stege 11, 12, 13, 14 so stark, dass sie sich mit ihren gekrümmten Abschnitten bis innen an die Deckschichten 1, 2 anlegen. Der Bereich des federelastischen Verformungsverhaltens ist damit beendet, jede weitere Hauptbelastung F führt dann zu einem starken Ansteigen der Federkennlinie des Formkörpers.

Der Belastungszustand Figur 2 lässt ferner erkennen, dass es zwar zu der angestrebten Berührung der jeweils ein Stegpaar bildenden Stege 11 und 12 bzw. 13 und 14 kommt, hingegen benachbarte Stege unterschiedlicher Gruppen so weit zueinander beabstandet sind, dass es bei Annäherung der Deckschichten 1, 2 zu keiner Berührung dieser Stege kommt. Insbesondere weisen die Stege 12 und 13, ungeachtet ihres elastischen Verformungsgrades, einen stets ausreichenden seitlichen Abstand A auf.

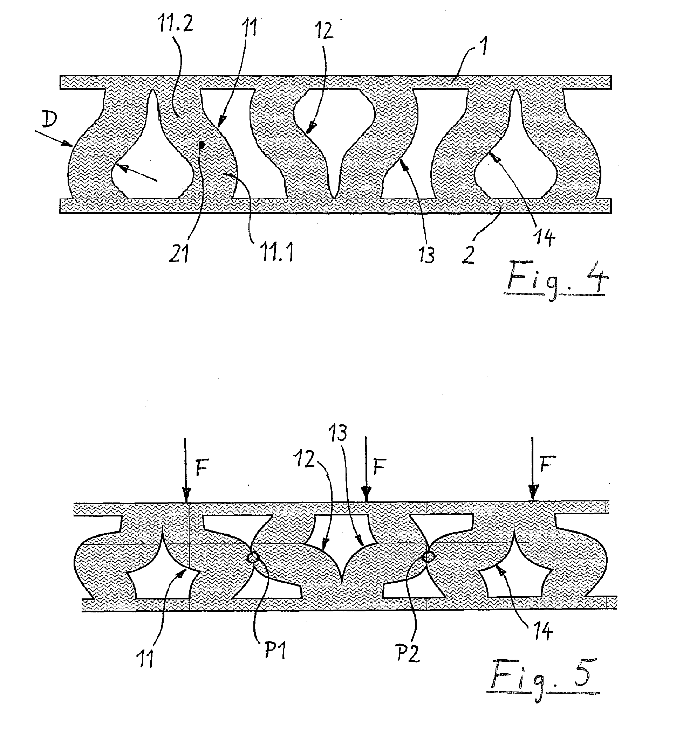

Die Figuren 4 und 5 zeigen einmal im unbelasteten und einmal im belasteten Zustand eine weitere Ausführungsform. Zur Aufnahme einer wesentlich höheren Hauptbelastung sind die Stege 11, 12, 13, 14 hier mit wesentlich größerer Wanddicke D gestaltet. Das Verformungsverhalten und insbesondere das sich Verkrümmen der Stege ist aber analog den Verhältnissen bei der ersten Ausführungsform nach den Figuren 1 bis 3. Wiederum kommt es bei entsprechend starker Verformung des Formkörpers zu einer Berührung und damit seitlichen Abstützung an den Orten P1, P2 zwischen den jeweils ein Stegpaar bildenden Stegen 11 und 12 bzw. 13 und 14.

## Patentansprüche

1. Elastischer Formkörper für die Schwingungs- und Körperschallisolation von z.B. Maschinen oder Bauten, bestehend aus einer ersten Deckschicht (1), einer hierzu parallelen zweiten Deckschicht (2) sowie einer Vielzahl von biegsamen Stegen (11, 12, 13, 14), welche zu den Deckschichten (1, 2) einstückig sind und sich zwischen diesen entlang eines gekrümmten Weges erstrecken, wobei sich an eine erste Krümmung (11.1, 12.1, 13.1, 14.1) mit erstem Krümmungssinn zumindest eine weitere Krümmung (11.2, 12.2, 13.2, 14.2) mit entgegensetztem Krümmungssinn anschließt,
**dadurch gekennzeichnet,**
**dass** sich zwei benachbarte Stege (11 und 12; 13 und 14) bei Annäherung der Deckschichten (1, 2) örtlich berühren.

2. Elastischer Körper nach Anspruch 1,
**dadurch gekennzeichnet,**
**dass** sich die Orte (P1, P2) der Berührung an den Krümmungen der beiden Stege (11 und 12; 13 und 14) befinden.

3. Elastischer Körper nach Anspruch 2,
**dadurch gekennzeichnet,**
**dass** sich der Ort (P1, P2) der Berührung an dem einen (11; 14) der benachbarten Stege an dessen erster Krümmung (11.1; 14.1), und an dem anderen (12; 13) der benachbarten Stege an dessen weiterer Krümmung (12.2; 13.2) befindet.

4. Elastischer Körper nach einem der Ansprüche 1 bis 3,
**dadurch gekennzeichnet,**
**dass** bei den beiden benachbarten Stegen (11 und 12; 13 und 14) die Aufeinanderfolge der Krümmungssinne gleich, jedoch die Größe und/oder der Radius der Krümmungsbögen jeweils unterschiedlich ist.

5. Elastischer Körper nach einem der vorangehenden Ansprüche, **gekennzeichnet durch**
eine erste Gruppe von Stegen (11, 12) und eine zweite Gruppe von Stegen (13, 14), wobei die Aufeinanderfolge der Krümmungssinne der Krümmungen in der ersten und der zweiten Gruppe entgegengesetzt ist, und auf mindestens zwei Stege (11, 12) der ersten Gruppe mindestens zwei Stege (13, 14) der zweiten Gruppe folgen.

6. Elastischer Körper nach Anspruch 5,
**dadurch gekennzeichnet,**
**dass** stets auf zwei Stege der ersten Gruppe zwei Stege der zweiten Gruppe folgen.

7. Elastischer Körper nach Anspruch 5 oder 6,
**dadurch gekennzeichnet,**
**dass** benachbarte Stege (12, 13) unterschiedlicher Gruppen so weit zueinander beabstandet sind, dass es bei Annäherung der Deckschichten (1, 2) zu keiner Berührung der Stege kommt.

8. Elastischer Körper nach einem der vorangehenden Ansprüche,
**dadurch gekennzeichnet,**
**dass** die Stege (11, 12, 13, 14) unter einem Winkel (W1, W2) von 30° bis 60° auf die Deckschichten (1, 2) stoßen.
